# EUROPÄISCHE PATENTANMELDUNG

(11) **EP 1 117 248 A2**
(43) Veröffentlichungstag der Anmeldung: **18.07.2001**
(21) Anmeldenummer: 00203371.0
(22) Anmeldetag: 26.09.2000
(51) Int. Cl.: H04N 3/15, H04N 5/32

(54) **Verfahren zum Auslesen der Sensorelemente eines Sensors sowie Sensor**

(30) Priorität: 02.10.1999 DE 19947536
(71) Anmelder: Philips Corporate Intellectual Property GmbH, 52064 Aachen (DE); Koninklijke Philips Electronics N.V., 5621 BA Eindhoven (NL)
(72) Erfinder: Rütten, Walter, Dr., 52064 Aachen (DE); Busse, Falko, Dr., 52064 Aachen (DE); Conrads, Norbert, 52064 Aachen (DE)
(74) Vertreter: Volmer, Georg, Dipl.-Ing.

(57) **Zusammenfassung**

Die Erfindung betrifft ein Verfahren zum Auslesen der Sensorelemente eines Sensors (1) mit einer in Zeilen und Spalten angeordneten Matrix von licht- oder röntgenstrahlempfindlichen Sensorelementen (S_{1,1}; S_{1,2}...), die in Abhängigkeit der auftreffenden Strahlungsmenge Ladungen erzeugen, wobei die Schalter (3) der jeweiligen Sensorelemente über Adressleitungen (4, , 8,...) aktiviert werden und die Ladungen der jeweils aktivierten Sensorelemente über Ausleseleitungen (9, 10, 11,...) abfließen, um über Verstärker (14,..., 18,...) und Übertragungsmittel (19) weiterverarbeitet zu werden. Zudem betrifft die Erfindung einen entsprechenden Sensor sowie ein Röntgenstrahluntersuchungsgerät, umfassend eine Röntgenstrahlquelle zum Aussenden eines Röntgenstrahlbündels zum Durchleuchten eines Objekts zur Bildung eines Röntgenbildes sowie einen Detektor zum Erzeugen eines elektrischen Bildsignals von diesem Röntgenstrahlbild. Dabei werden trotz gering auftreffender Röntgenstrahldosen ausreichende Ladungsmengen und somit elektrische Signale zur Erzeugung des Bildes bereitgestellt, in dem eingehende Adressleitungen (4,..., 8,...) wahlweise mittels individuell ansteuerbarer Schalterelemente (27,..., 30,...) über einen Umschaltvorgang jeweils so mit der jeweils nächsten Adressleitung verbunden und die Sensorelemente von mindestens zwei benachbarten Zeilen mit einem eingehenden Signal aktiviert werden, und entsprechende ausgehende Ausleseleitungen (9,... 13,...) wahlweise mittels individuell ansteuerbarer Schalterelemente (31,... 34,...) über einen Umschaltvorgang jeweils so mit der jeweils nächsten Ausleseleitung verbunden werden und die ausgelesenen Ladungssignale der aktivierten Sensorelemente von mindestens zwei benachbarten Spalten zu einem Output-Signal zusammengefaßt werden.

## Beschreibung

Die Erfindung betrifft ein Verfahren zum Auslesen der Sensorelemente eines Sensors mit einer in Zeilen und Spalten angeordneten Matrix von licht- oder röntgenstrahlempfindlichen Sensorelementen, die in Abhängigkeit der auftreffenden Strahlungsmenge Ladungen erzeugen, wobei die Schalter der jeweiligen Sensorelemente über Adressleitungen aktiviert werden und die Ladungen der jeweils aktivierten Sensorelemente über Ausleseleitungen abfließen, um über Verstärker und Übertragungsmittel weiterverarbeitet zu werden. Zudem betrifft die Erfindung einen entsprechenden Sensor sowie ein Röntgenstrahluntersuchungsgerät, umfassend eine Röntgenstrahlquelle zum Aussenden eines Röntgenstrahlbündels zum Durchleuchten eines Objekts zur Bildung eines Röntgenbildes sowie einen Detektor zum Erzeugen eines elektrischen Bildsignals von diesem Röntgenstrahlbild.

Auf dem Gebiet der medizinischen Röntgenstrahluntersuchung werden großflächige Röntgenstrahldetektoren eingesetzt, die sich aus einer Sensormatrix mit einer Vielzahl von in Zeilen und Spalten angeordneten Sensorelementen bzw. Pixeln zusammensetzen. Die Sensorelemente umfassen Photodioden aus amorphem Silizium und damit verbundenen Szintillatorelementen oder alternativ Photoleiter zur Umwandlung der Röntgenstrahlung in elektrische Ladung. Jedes Sensorelement ist mit einem Schalter zum Auslesen der Ladung versehen, beispielsweise mit TFT (thin-film-transistor)-Schaltern aus amorphem Silizium oder Diodenschaltern. Um die angesammelten Ladungen zu lesen, werden die Schalter geschlossen bzw. aktiviert und die gesammelte Ladung zu entsprechenden Ausleseleitungen geleitet, von denen sie in entsprechende ladungsempfindliche Verstärker fließt, die anschließend ein elektronisches Signal zu einem Multiplexer geben, der die Ladungssignale der entsprechenden Ausleseleitungen an eine Datenerfassungseinheit weitergibt, um mittels eines Monitors als Bildwiedergabegerät dargestellt zu werden.

Bei der Verwendung derartiger Detektoren für die medizinische Untersuchungspraxis ist es wegen einer geringen Strahlungsbelastung des Patienten erwünscht, die Dosis der Strahlung zu reduzieren, was zur Folge hat, dass auf die einzelnen Sensorelemente nur eine sehr geringe Strahlungsmenge auftritt. Infolgedessen ist auch die elektrische Ladung, die in den einzelnen Sensorelementen in Abhängigkeit der auftreffenden Strahlungsmenge erzeugt wird, nur sehr gering. Hieraus ergeben sich häufig Probleme, d.h. das ausgelesene Signal ist mit relativ starkem Rauschen überlagert. In diesem Zusammenhang ist das sogenannte Binning bekannt, d.h. ein gruppenweises Auslesen von Sensorelementen bzw. das Auslesen eines räumlichen Durchschnitts an Pixeln.

Aus der EP 0 776 124 A2 ist ein Verfahren und eine Vorrichtung zur Abbildung eines Objektes mittels Detektion von Strahlung unter Verwendung eines Bildsensorsystems bekannt. Um ein optimales Verhältnis zwischen der Bildauflösung und der Empfindlichkeit des Sensors zu gewährleisten, werden die Ladungen der Sensorelemente entlang der einzelnen Zeilen oder Spalten der Sensormatrix ausgelesen und anschließend gruppenweise zusammengefaßt. Die hierfür vorgeschlagenen Verfahrensvarianten basieren auf einer Veränderung von Steuersignale, deren Ablauf programmierbar ist. Die EP 0 776 124 A2 ist insbesondere auf das Binning von CCD Sensoren gerichtet.

Bei bekannten Detektoren, die auf gattungsgemäßen Matrixsensoren basieren, erfolgt der Ausleseprozeß der Ladungen in den einzelnen Sensorelementen bzw. Pixeln üblicherweise reihenweise bzw. spaltweise. Soll beispielsweise gerade die erste Zeile ausgelesen werden, so sind die Schalter der in dieser Zeile befindlichen Sensoren mittels der jeweils entsprechenden Adressleitung aktiviert. Die in den Kapazitäten der in dieser Zeile vorgesehenen Sensorelementen gespeicherten Ladungen fließen dann jeweils über den elektrischen Schalter des jeweiligen Sensorelementes und über die entsprechende Ausleseleitung ab.

Auch bei derartigen Sensoren ist ein Binning bekannt, indem mittels bekannter Schieberegister die zeilenweisen Scans von einer Zeile auf mehrere Zeilen erweitert werden. Nachteilig ist aber, dass die Anzahl der zusammengefaßten Zeilen oder Spalten innerhalb einer Aufnahme konstant sind.

Bei dem spaltenweisen Auslesen, wobei üblicherweise ein Ladungsverstärker pro Spalte und pro Ausleseleitung vorgesehen ist, wird eine Verknüpfung (Binning) erreicht durch Verbinden von zwei benachbarten Ausleseleitungen in einem Verstärker, durch Verbinden zweier benachbarter Verstärkerkanäle oder mittels einer Durchschnittsberechnung während der nachfolgenden Bildverarbeitung. Nach den beiden ersten Methoden kann jeweils nur spaltweise bzw. in definierten Gruppen von Spalten ausgelesen werden. Obwohl die Berechnungsmethode eine größere Flexibilität gegenüber den beiden anderen Methoden aufweist, wird nur nach der erstgenannten Methode das gewünschte geringe Rauschen erreicht; allerdings betrifft die Zusammenfassung von je zwei benachbarten Ausleseleitungen den gesamten Detektor.

Hiervon ausgehend ist es Aufgabe der vorliegenden Erfindung, ein Verfahren und einen Sensor bereitzustellen, mit dem trotz geringer auftreffender Röntgenstrahldosen ausreichende Ladungsmengen und somit elektrische Signale zur Erzeugung des Bildes bereitgestellt werden können.

Diese Aufgabe wird mittels eines Verfahrens gelöst, das dadurch gekennzeichnet ist, dass eingehende Adressleitungen wahlweise mittels individuell ansteuerbarer Schalterelemente über einen Umschaltvorgang jeweils so mit der jeweils nächsten Adressleitung verbunden werden, dass die Sensorelemente von mindestens zwei Zeilen mit einem eingehenden Signal aktiviert werden, und dass entsprechende ausgehende Ausleseleitungen wahlweise mittels individuell ansteuerbarer Schalterelemente über einen Umschaltvorgang jeweils so mit der jeweils nächsten Ausleseleitung verbunden werden, dass die ausgelesenen Ladungssignale der aktivierten Sensorelemente von mindestens zwei benachbarten Spalten zu einem Signal zusammengefaßt werden und auf nur einen Verstärker gegeben werden.

Durch die Steuerung von Umschaltvorgängen wird entweder die jeweilige Verbindung der Adress- bzw. Ausleseleitung mit den Schaltern pro Zeile oder Spalte belassen oder eine Verbindung mit der jeweils benachbarten - entweder der jeweils vorhergehenden oder folgenden - Leitung geschaffen. Auf diese Weise ist es möglich, durch die Überlappung einer beliebig gewählten Anzahl von Zeilen von aktivierten Sensorelementen sowie einer beliebig gewählten Anzahl von Spalten zum Auslesen ein individuelles programmierbares Binningmuster, d.h. beliebige Blöcke von Zeilen und Spalten, zu erhalten. Neben der Größe der einzelnen ausgelesenen Flächen von Sensorelementen ist ebenso die zeitliche Abfolge von verschiedenen Binningmustern programmierbar. Es ist ein räumlich inhomogenes Binning, d.h. das Auslesen verschiedener Flächen in unterschiedlichen Bereichen des Detektors, realisierbar.

Vorzugsweise wird die Binning-Größe, d.h. die Anzahl der zusammengefaßten Zeilen oder Spalten, innerhalb eines Frames bzw. Aufnahme variiert. Durch Verwendung verschiedener Binning-Größen ist es möglich, an Stellen mit geringem Signal über ein stärkeres Binning das Signal-Rausch-Verhältnis zu verbessern, während an Stellen mit gutem Signal-Rausch-Verhältnis die volle Auflösung beibehalten werden kann.

Mittels des vorgeschlagenen Verfahrens kann die Größe der Binningblöcke innerhalb eines Bildes verändert werden. In Bereichen, in denen das einzelne Sensorelement nur ein schlechtes Signal-Rausch-Verhältnis liefert, wird durch ein Binning über größere Bereiche (2x2, 3x3,...,oder auch unsymmetrisch) das Rauschen reduziert und das Signal-Rausch-Verhältnis damit verbessert. Die damit einhergehende geringere Ortsauflösung wird in Kauf genommen. In Bereichen, in denen das einzelne Sensorelement bereits ein gutes Signal-Rausch-Verhältnis liefert, wird nur ein Binning über kleine Bereiche (2x2 oder kein Binning (1x1)) gewählt, so dass eine hohe Ortsauflösung erhalten bleibt.

Insgesamt ist durch das Binning der ausgelesenen Ladungen vor den Verstärkern das unerwünschte Rauschen minimierbar. Zudem soll nach einer Weiterentwicklung des Verfahrens in den ursprünglich programmierten Ausleseablauf von Binningmustern während der Bildaufnahme eingreifbar sein.

Erreicht wird dieses variable programmierbare Binningmuster mittels eines Sensors, der dadurch gekennzeichnet ist, dass zwischen den Aktivierungsmitteln und den elektrischen Sensorschaltern eine erste Einheit von Schalterelementen angeordnet ist und zwischen den elektrischen Sensorschaltern und Verstärkern eine zweite Einheit von Schalterelementen angeordnet ist. Zusätzlich ist ein System zur individuellen Steuerung der Schalterelemente vorgesehen, um durch einen Umschaltvorgang eine beliebige Anzahl von Schalt- bzw. Ausleseleitungen jeweils mit mindestens einer benachbarten Leitung zu verbinden. Insgesamt wird über das Steuersystem bestimmt, ob und welche Schalterelemente einen Umschaltvorgang durchführen und somit, ob die entsprechende Sensorzeile bzw. Sensorspalte zusammen mit benachbarten Zeilen oder Spalten oder herkömmlich rein zeilen- bzw. spaltenweise abgelesen wird.

Die erfindungsgemäß vorgeschlagenen Schalterelemente sind nach einer ersten Ausführungsform in bzw. an den Adress- bzw. Ausleseleitungen und damit den Aktivierungs- bzw. Ausleseschaltungen angeordnet. Nach einer zweiten Ausführungsform sind sie direkt in der Sensormatrix integriert, indem sie entweder ebenfalls wie die Photodioden und TFT-Schalter der Sensorelemente aus amorphen Silizium hergestellt sind oder indem sie auf (rekristallisiertem) polykristallinen Silizium angeordnet sind.

Nach einer bevorzugten Ausführungsform ist das Steuersystem für die erste und zweite Einheit von Schalterelementen als ein erstes und zweites Schieberegister ausgebildet mit mehreren Schieberegisterelementen, wobei jeweils ein Schieberegisterelement einem Schalterelement pro Adressleitung bzw. Ausleseleitung zugeordnet ist. Das erste Schieberegister dient als Serien-Parallelumsetzer, das zweite als Parallel-Serienumsetzer. Um ein beliebiges Binningmuster auszubilden mit sich flächig erstreckenden Gruppen von Sensorelementen, die von herkömmlich ausgelesenen Zeilen oder Spalten unterbrochen werden, sind die Schieberegister so ausgebildet, dass die einzelnen Schieberegisterelemente, die an einem Binning nicht teilnehmen sollen, automatisch übersprungen werden. Somit ist ein Takt ausreichend, um einen nächsten Block von Zeilen anzusprechen, der von einem ersten Block über die übersprungene Zeile getrennt ist.

Das Steuerschieberegister ist vorzugsweise zweifach gepuffert ausgebildet. Somit kann ein neues Binningmuster in einem ersten Speicherplatz getaktet werden, während in einem zweiten Speicherplatz die unveränderte Binningsteuerungsinformation für die entsprechenden Zeilen- bzw. Spaltenblocks erhalten bleibt. Nach Ablauf des Blocks wird die neue Steuerungsinformation von dem ersten Speicherplatz auf den zweiten Speicherplatz des Steuerschieberegisters übertragen.

Anstelle der Schieberegister oder zusätzlich zu diesem findet ein wahlfrei adressierbares Register Anwendung, um schnelle Aktualisierungen des Binningmusters zu erreichen. Es wird ebenfalls ein doppelt gepuffertes Schema bevorzugt.

Weitere Einzelheiten und Vorteile der Erfindung ergeben sich aus den Unteransprüchen und der nachfolgenden Beschreibung, in der die in den Figuren dargestellten Ausführungsbeispiele der Erfindung näher erläutert werden. Es zeigen:
Figur 1 ein Schaltschema einer Sensormatrix mit einer nach der Erfindung beeinflußten Aktivierungsschaltung;
Figur 2 das entsprechende Schaltschema einer Sensormatrix mit einer nach der Erfindung beeinflußten Ausleseschaltung;
Figur 3 ein Röntgenstrahluntersuchungsgerät, welches einen Röntgenstrahlsensor gemäß der Erfindung aufweist.

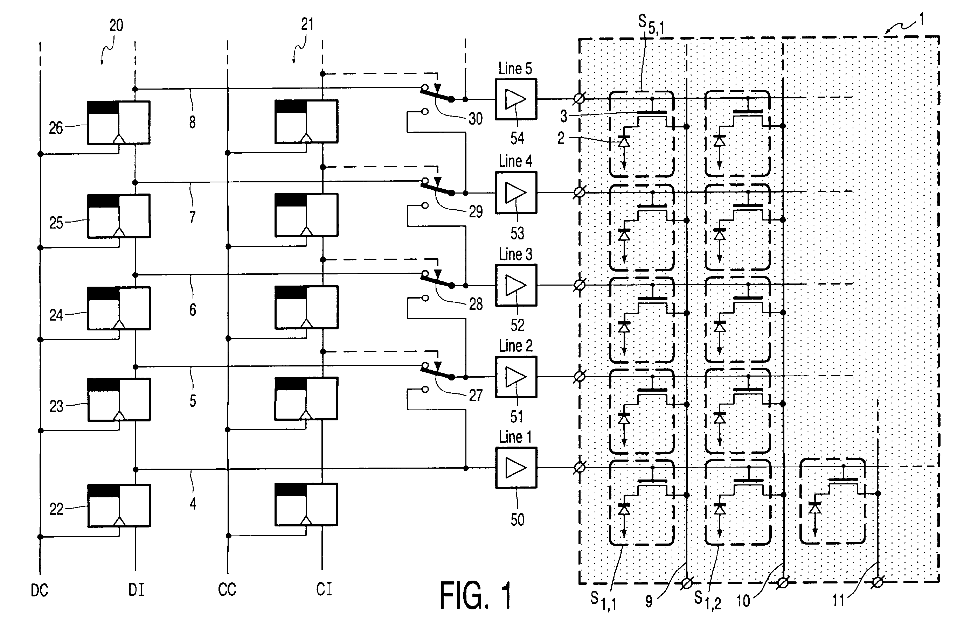

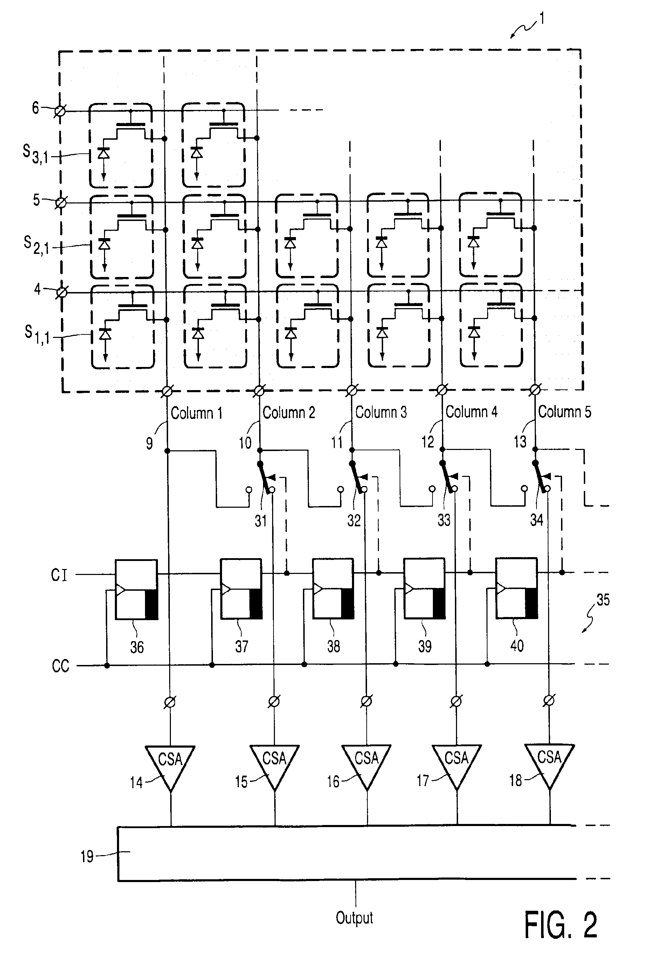

Figur 1 zeigt ein Schaltschema einer Röntgenstrahlsensormatrix 1 mit zwei Schieberegistern zur Aktivierung der Schalter der Sensorelemente, Figur 2 zeigt das Schaltschema einer Röntgenstrahlsensormatrix mit zwei Schieberegistern zum Auslesen der aktivierten elektrischen Schalter der Sensorelemente.

Figur 1 zeigt einen Ausschnitt einer Sensormatrix 1, in der die Sensorelemente in Zeilen und Spalten angeordnet sind. Eine solche Matrix kann beispielsweise 2000 x 2000 Sensorelemente aufweisen, von denen in der Figur 1 und 2 nur einige beispielhaft dargestellt sind. Zum besseren Verständnis der nachfolgenden Erläuterungen werden in Figur 1 die Sensorelemente einer bestimmten durchnumerierten Zeile zugeordnet, also S_{1,1}, S_{1,2} usw., wobei der erste Index die Zeile und der zweite Index die Spalte angibt.

Für jedes Pixel ist ein für Röntgenstrahlung empfindliches Sensorelement vorgesehen, das einen Photosensor 2, eine Kapazität und einen Schalter 3 aufweist. Die Photosensoren können bei Einsatz geeigneter Halbleiter selbst bereits röntgenstrahlempfindlich sein. Es kann sich aber auch um eine lichtempfindliche Photodiode handeln, wobei die Umsetzung von Röntgenstrahlen in Licht mittels eines zusätzlichen Szintillators erfolgt. In den Figuren 1 und 2 sind die Photosensoren als Photodioden 2 angedeutet. Die elektronischen Schalter 3 sind vorzugsweise als TFTs (thin-film-Transistoren) ausgebildet.

Einfallende Röntgenstrahlen werden mittels des Photosensors mit Szintillator in Ladungen umgewandelt, die mittels der Kapazität gesammelt werden. Die Kapazität kann entweder integraler Bestandteil der Photodioden sein oder auch als separater Bauteil ausgeführt sein. Die in der Kapazität nach einer gewissen Zeit gespeicherte Ladung ist ein Maß für die Strahlungsintensität. Diese Ladung ist über die elektrischen Schalter für jedes Sensorelement auslesbar. Dazu ist für jede Zeile der Sensormatrix eine Adressleitung 4 bis 8 vorgesehen. Über diese Adressleitungen können die elektrischen Schalter 3 der zugeordneten Zeile aktiviert werden.

Für jede Spalte der in Figur 1 ausschnittsweise angedeuteten Matrix ist je eine Ausleseleitung 9, 10, 11 vorgesehen, wobei die den Ausleseleitungen nachgeordneten Schaltungen in Figur 2 verdeutlicht werden. Die Ausleseleitungen, in Figur 2 mit 9 bis 13 bezeichnet, sind jeweils mit Verstärkern 14 bis 18 verbunden, die die Ausgangssignale an einen Multiplexer 19 weiterleiten. Der Multiplexer 19 liefert das elektronische Bildsignal an einen Monitor oder einen Bildprozessor.

Im Gegensatz zu den herkömmlichen Sensormatrizes, bei denen nur ein über den gesamten Detektor identisches Binningmuster gewählt werden kann, ist mittels der erfindungsgemäßen Sensormatrix mit vor- bzw. nachgeschalteten Schaltungen ein Auslesen nach einem örtlich vorgebbaren bzw. programmierbaren Binningmuster innerhalb eines Bildes, d.h. ein nicht konstantes Binningmuster, möglich.

Der Sensormatrix 1 sind hierzu nach der Ausführungsform von Figur 1 zwei Schieberegister 20, 21 vorgeordnet. Das auch als Aktivierungsmittel bezeichnete Schieberegister 20 setzt sich aus mehreren hintereinander geschalteten Speichern oder Schieberegisterelementen 22 bis 26 zusammen, deren Anzahl der Anzahl der Zeilen der Sensormatrix entsprechen. Die Schaltung ist so aufgebaut, dass durch einen Schiebeimpuls (hier mit DC für Data clock bezeichnet) alle Speicher ihre Information (DI für Data Input) an den jeweiligen Nachbarspeicher weiterschieben. Diesem Schieberegister nachgeordnet sind Schalterelemente 27 bis 30. Nach dem vorliegenden Ausführungsbeispiel weisen die Adressleitungen 5 bis 8 ein derartiges Schalterelement auf, während die Adressleitung 4 keine Vorgängerleitung aufweist und deshalb kein Schaltelement benötigt.

Entweder sind die Adressleitungen jeweils mit der entsprechenden Zeile an Sensorelementen direkt verbunden, oder es werden mittels der Schalterelemente die einzelnen Adressleitungen unterbrochen und eine Verbindung zu der jeweiligen Vorgängeradressleitung geschaffen. Auf diese Weise ist es möglich, dass die Sensorelemente von mindestens zwei benachbarten Zeilen mit einem eingehenden Signal aktiviert werden. Bei dem vorliegenden Beispiel wird die fünfte Leitung (8) mit der vierten (7), die vierte (7) mit der dritten (6), die dritte (6) mit der zweiten (5) und die zweite (5) mit der ersten Adressleitung (4) verbunden. Im Ergebnis werden mit der Information der ersten Adressleitung (4) die Sensorelemente der Zeilen 1 bis 5 aktiviert.

Durch beliebige Steuerung der Umschaltprozesse der Schalterelemente ist folglich die Aktivierung einer beliebigen Anzahl von zusammengehörigen Zeilen erreichbar. Gesteuert werden die Schalterelemente 27 bis 30 mittels eines zusätzlichen Schieberegisters 21. Im Takt der Schiebefrequenz (CC für Control Clock) werden Informationen (CI für Control Input) in Form von Steuerbefehlen zum Umschalten der jeweiligen Adressleitungen abgegeben.

Zwischen dem Register und der Sensormatrix sind innerhalb der Adressleitungen Verstärker 50 bis 54 vorgesehen. Alternativ sind Pegelwandler denkbar. Diese heben die oft geringen Ausgangsspannungen der rein digitalen Steuersignale, die beispielsweise beim Schieberegister bei 5V liegen, auf die zur Ansteuerung der TFTs notwendige Größe an, die üblicherweise 20 bis 25V benötigen.

Bei den Schalterelementen 27 bis 30 in den Adressleitungen bzw. bei den Aktivierungsschalterelementen kann es sich um TFTs handeln. In zweifacher Ausführung mit gegensinniger Ansteuerung realisieren diese jeweils ein Schalterelement. In diesem Fall könnte die (analoge) Spannung der Aktivierungsleitung hinter dem Verstärker bzw. Pegelwandler geschaltet werden. Nach der Ausführungsform von Figur 1 sind die Schalterelemente 27 bis 30 den Verstärkern 50 bis 54 vorgeordnet. Alternativ ist die Verwendung eines digitalen Multiplexers mit zwei Eingängen denkbar, dessen digitales Ausgangssignal mit Hilfe von verstärkern oder Pegelwandlern auf die nötige Amplitude gebracht wird.

Bei den Schalterelementen 31 bis 34 in den Ausleseleitungen kommen nur rein analoge Schalter, beispielsweise TFT oder (MOS)-FET in Frage, da die Ladungen aus den Sensorelementen unverändert übertragen werden.

In zu Figur 1 beschriebenen analogen Weise findet die Steuerung von Umschaltvorgängen von Schalterelementen ebenfalls bei den Ausleseleitungen statt (Figur 2). In Figur 2 ist die Sensormatrix 1 wiederum nur ausschnittsweise dargestellt, jetzt mit drei Reihen und fünf Spalten. Nach der bekannten Methode wird die Ladung der Sensorelemente jeder Spalte mittels einer Ausleseleitung 9 bis 13 ausgelesen, die mit einem Verstärker, hier mit 14 bis 18 bezeichnet, verbunden ist. Die Ausgänge der einzelnen Verstärker werden in einem Multiplexer 19 vereinigt und als Output-Signal ausgegeben. In Weiterentwicklung hierzu ist erfindungsgemäß eine Einheit von Schalterelementen 31 bis 34 vorgesehen, wobei hier die zweite und die nachfolgenden Spalten ein Schalterelement aufweisen, das in der jeweiligen Ausleseleitung angeordnet ist. Mit den Schalterelementen wird die jeweilige Ausleseleitung entweder direkt mit dem zugehörigen Verstärker oder mit der jeweils benachbarten Ausleseleitung verbunden. Bei dem vorliegenden Beispiel kann durch Umschaltvorgänge die zweite Ausleseleitung (10) mit der ersten (9), die dritte Ausleseleitung (11) mit der zweiten (10) usw. verbunden werden. Eine gesammelte Menge an Ladungen wird demnach nur von der ersten Ausleseleitung (9) in den Verstärker (14) geführt.

Die einzelnen Schalterelemente 31 bis 34 werden mittels eines Schieberegisters 35 gesteuert. Die Steuerung selbst erfolgt analog der oben beschriebenen Steuerung der Adressleitungen.

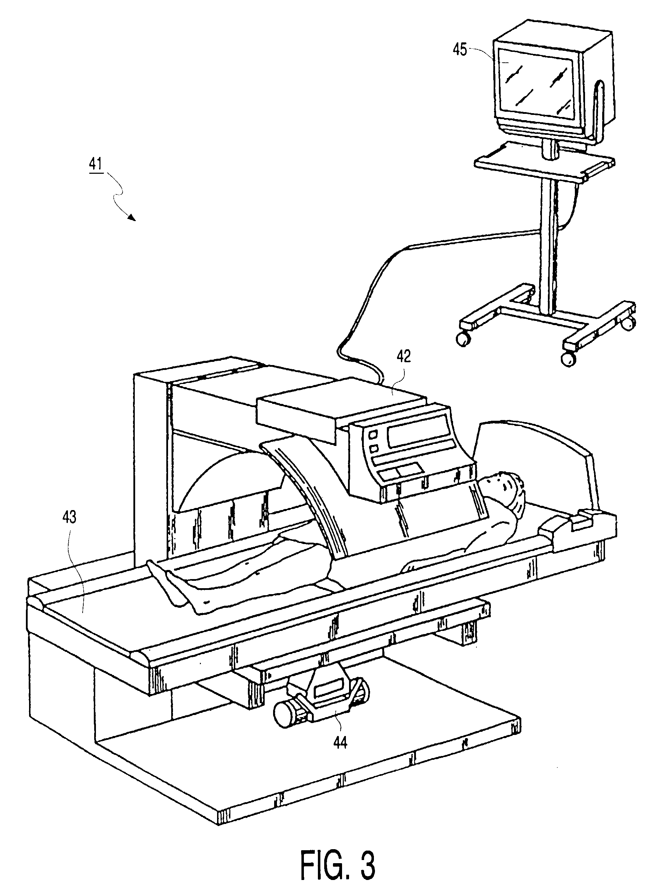

Figur 3 stellt ein medizinisches Röntgenstrahluntersuchungsgerät 41 dar mit einem Detektor 42, der einen Röntgenstrahlsensor gemäß der Erfindung aufweist. Das Röntgenstrahluntersuchungsgerät 41 umfaßt eine Liegefläche 43 für einen Patienten. Eine Röntgenstrahlquelle 44 ist unterhalb dieser Liege vorgesehen. Der Röntgenstrahldetektor 42 ist zur Strahlungsquelle 44 verstellbar angeordnet. Um ein Röntgenbild zu erzeugen, wird der Patient mit einem Röntgenstrahl durchleuchtet. In Abhängigkeit von lokalen Unterschieden der Röntgenstrahlabsorption durch den Patienten wird ein Röntgenbild mittels des Detektors erzeugt. Mittels des Röntgenstrahlsensors wird dieses Bild in elektrische Signale umgewandelt, die dann zur Darstellung des Röntgenbildes zu dem Monitor 45 geliefert werden. Mittels des erfindungsgemäßen Sensors ist es möglich, trotz geringer Strahlendosen zur geringeren Belastung des Patienten ausreichende Ladungsintensitäten zur Darstellung des Röntgenbildes auszulesen, wobei ein Auslesen in Zeilen- und Spaltenblöcken programmierbarer Größe stattfindet.

## Patentansprüche

1. Verfahren zum Auslesen der Sensorelemente eines Sensors (1) mit einer in Zeilen und Spalten angeordneten Matrix von licht- oder röntgenstrahlempfindlichen Sensorelementen (S_{1,1}; S_{1,2}...), die in Abhängigkeit der auftreffenden Strahlungsmenge Ladungen erzeugen, wobei die Schalter (3) der jeweiligen Sensorelemente über Adressleitungen (4, , 8,...) aktiviert werden und die Ladungen der jeweils aktivierten Sensorelemente über Ausleseleitungen (9, 10, 11,...) abfließen, um über Verstärker (14,..., 18,...) und Übertragungsmittel (19) weiterverarbeitet zu werden,
dadurch gekennzeichnet,
dass eingehende Adressleitungen (4,..., 8,...) wahlweise mittels individuell ansteuerbarer Schalterelemente (27,..., 30,...) über einen Umschaltvorgang jeweils so mit der jeweils nächsten Adressleitung verbunden werden, dass die Sensorelemente von mindestens zwei benachbarten Zeilen mit einem eingehenden Signal aktiviert werden, und
dass entsprechende ausgehende Ausleseleitungen (9,... 13,...) wahlweise mittels individuell ansteuerbarer Schalterelemente (31,... 34,...) über einen Umschaltvorgang jeweils so mit der jeweils nächsten Ausleseleitung verbunden werden, dass die ausgelesenen Ladungssignale der aktivierten Sensorelemente von mindestens zwei benachbarten Spalten zu einem Output-Signal zusammengefaßt werden.

2. Verfahren nach Anspruch 1,
dadurch gekennzeichnet,
dass die Größe einer auszulesenden Gruppe von Sensorelementen und/oder die Verteilung mehrerer auszulesender Gruppen von Sensorelementen über die Gesamtmatrix als Binningmuster vorgegeben wird und das Binningmuster örtlich während einer Aufnahme variabel ist.

3. Verfahren nach Anspruch 2,
dadurch gekennzeichnet,
dass in den programmierten Ablauf eines Binningmusters während der Bildaufnahme eingreifbar ist.

4. Sensor, umfassend eine Matrix in Zeilen und Spalten angeordneter licht- oder röntgenstrahlempfindlicher Sensorelemente (S_{1,1}; S_{1,2}...), die in Abhängigkeit der auftreffenden Strahlungsmenge Ladungen erzeugen, die jeweils einen Schalter (3) aufweisen, mit einer Adressleitung (4,..., 8,...) je Sensorzeile zur Verbindung mit Aktivierungsmitteln (20), über die die elektrischen Sensorschalter aktivierbar sind, mit einer Ausleseleitung (9,..., 13,...) je Sensorspalte, über die Ladungen der jeweils aktivierten Sensorelemente abfließen, mit Übertragungsmitteln (19) am Ende der jeweiligen Ausleseleitung zum Umsetzen der parallel ausgelesenen Signale in ein serielles Signal sowie mit den Übertragungsmitteln vorgeschalteten Verstärkern (14,..., 18,...),
dadurch gekennzeichnet,
dass eine erste Einheit von Schalterelementen (27,..., 30,...) zwischen den Aktivierungsmitteln (20) und den elektrischen Sensorschaltern angeordnet ist,
dass eine zweite Einheit von Schalterelementen (31, ..., 34,...) zwischen den elektrischen Sensorschaltern und Verstärkern (14,..., 18,...) angeordnet ist,
sowie ein System (21, 35) zur Steuerung der Umschaltvorgänge der Schalterelemente vorgesehen ist, um jeweils eine Schalt- bzw. eine Ausleseleitung mit mindestens einer benachbarten Leitung zu verbinden.

5. Sensor nach Anspruch 4,
dadurch gekennzeichnet,
dass die Schalterelemente entweder an Schalt- bzw. Ausleseleitungen angeordnet sind oder direkt in der Sensormatrix integriert sind.

6. Sensor nach Anspruch 4,
dadurch gekennzeichnet,
dass das Steuersystem für die erste und zweite Einheit von Schalterelementen ein erstes und zweites Schieberegister (20, 35) ist mit mehreren Schieberegisterelementen (22,..., 26,...; 36,..., 40,...), wobei jeweils ein Schieberegisterelement einem Schalterelement pro Adressleitung bzw. Ausleseleitung zugeordnet ist.

7. Sensor nach Anspruch 6,
dadurch gekennzeichnet,
dass ein Schieberegister bidirektional ausgebildet ist.

8. Sensor nach Anspruch 6,
dadurch gekennzeichnet,
dass zusätzlich zu den beiden Schieberegistern (20, 35) oder anstelle der Schieberegister ein wahlfrei adressierbares Register vorgesehen ist.

9. Sensor nach Anspruch 6 oder 8,
dadurch gekennzeichnet,
dass das jeweilige Steuerschieberegister zweifach gepuffert ist.

10. Röntgenstrahluntersuchungsgerät, umfassend eine Röntgenstrahlquelle (44) zum Aussenden eines Röntgenstrahlbündels zum Durchleuchten eines Objekts zur Bildung eines Röntgenbildes sowie einen Detektor (42) zum Erzeugen ei nes elektrischen Bildsignals von diesem Röntgenstrahlbild,
dadurch gekennzeichnet,
dass der Röntgenstrahldetektor (42) einen Sensor nach den Ansprüchen 4 bis 9 umfaßt.
